# EUROPEAN PATENT APPLICATION

(11) **EP 1 274 031 A2**
(43) Date of publication of application: **08.01.2003**
(21) Application number: 02000279.6
(22) Date of filing: 15.01.2002
(51) Int. Cl.: G06F 17/60

(54) **Facility management system based on circulation information**

(30) Priority: 06.07.2001 JP 2001206405
(71) Applicant: Hitachi, Ltd., Chiyoda-ku, Tokyo 101-8010 (JP)
(72) Inventor: Miyoshi, Masanori, Mito-shi, Ibaraki 310-0062 (JP); Shojima, Hiroshi, Hitachiota-shi, Ibaraki 313-0022 (JP); Usami, Yoshiaki, Hitachi-shi, Ibaraki 316-0021 (JP); Takahashi, Kazuya, Hitachi-shi, Ibaraki 316-0025 (JP)
(74) Representative: Beetz & Partner Patentanwälte

(57) **Abstract**

The invention relates to a flow line measuring means (102) for measuring the flow line of the moving body by detecting the moving body in an object to be monitored; a movement cost calculating means (106) for calculating a cost expended on movement of the moving body, that is, a movement cost from the flow line information; and a movement cost evaluating means (108) for judging whether or not a cost calculated by the movement cost calculating means (106) is within a permissible range.

## Description

### BACKGROUND OF THE INVENTION

### Field of the Invention

The present invention relates to a facility management system for effectively using a facility based on information of measured person flow lines.

### Prior Art

In order to effectively use a facility such as an office building, a manufacturing line in a factory, various kinds of facility management technologies are being developed.

Among them, there are technologies aiming at effective use of a facility by optimizing a layout of the facility. In regard to the technology aiming at optimizing a layout of an office building, a technique known as zoning is described in "Facility Management Guidebook; second edition" (Nikkan Kougyou Shinnbun Co.) p. 356 to p. 359. The zoning means a technique of laying out departments in spaces inside a building so that a company organization may effectively function. In order to do so, degrees of proximity connection expressing intensities of connection between the departments are researched, and the departments having a high degree of proximity connection with each other are laid out in spaces as close as possible. Therein, it can be considered that as the proximity degree between departments is higher, movement more frequently occurs between the departments. Therefore, by the layout described above, it is possible to totally reduce the time expended on movement which produces any value, and accordingly to attain effective use of the office building.

Further, in regard to technologies aiming at optimization of a layout of a manufacturing line in a factory, a method of configuring a semiconductor manufacturing line is disclosed in Japanese Patent Application Laid-Open No.6-84740. In this technology, the manufacturing line is laid out so that moving distances of persons and materials may be shortened under a constraint condition that number of the equipment is suppressed as small as possible. By doing so, it is possible to reduce the time expended on movement, and accordingly to attain effective use of the manufacturing line.

Furthermore, there are technologies for imposing using charge corresponding to using of a facility in order to reduce maintenance and management cost of a commonly used facility or to reduce unfair feeling in sharing of maintenance and management cost. For example, Japanese Patent Application Laid-Open No.6-187348 discloses a method that under assumption of a shopping building having a common parking lot, unfair feeling among the shops is eliminated by determining a share of each shop to the cost of customers' parking fares based on a sales volume of each shop to the customer using the common parking lot. Therein, when a customer leaves the parking lot, a construction ratio of sale for each shop is calculated referring to a POS (Point Of Sale; a point-of-sale information management system) to calculate a share of parking charge for each shop based on the construction ratio. Thereby, it is possible to impose charge on each shop with reality and without unfair feeling.

Still further, there is a technology for automatically controlling a facility such as an elevator installed in a building according to movements of a person for convenience of the person. For example, Japanese Patent Application Laid-Open No.2000-191246 discloses a technology in which calling of an elevator is eliminated and waiting time of the elevator is shortened. Therein, the object to be controlled relates to an elevator installed in an apartment house, and the elevator is automatically called by expecting that when doors in the common entrance and in each house are opened or closed, there is high probability of someone taking the elevator. By doing so, the calling operation of the elevator becomes unnecessary because the elevator is automatically called by opening and closing of the doors. In addition, the elevator can be called from a place distant from the elevator, waiting time of the elevator can be shortened.

Further, maintenance work of a facility such as cleaning is generally periodically performed after making a maintenance plan. For example, it can be assumed that cleaning is performed every Monday and Thursday.

Furthermore, Japanese Patent Application Laid-Open No.2000-191246 discloses a person flow line information collecting method and a person flow line information collecting system in which a plurality of picture-taking means are individually installed at a plurality of positions inside a facility including an entrance, and individual person flow line information as a function of time is collected by extracting a personal image from captured images. In the personal flow line information, personal attribute information and flow line information are connected to each other, and accordingly store-visiting pattern on the attribute basis can be automatically collected. Further, Japanese Patent Application Laid-Open No.11-64505 discloses a flow line searching system for calculating and displaying a moving path of a customer by installing transmitters at various positions inside a shop and attaching a receiver to a shopping basket. Since moving path of a person inside a facility can be certainly grasped by the system, the layout inside the facility can be easily changed.

Even if a layout of a facility is appropriate in the beginning, the layout may gradually become inappropriate with the passage of time due to change in a condition of using the facility caused by change of the organization or the like. Therefore, it is important to change the layout of the facility in an appropriate timing by grasping a condition of appropriateness of the layout at present. However, the conventional technologies in regard to the zoning described above requires a large amount of manpower because the status of the layout at present needs to be manually grasped. Therefore, the appropriateness of layout is difficult to be continuously grasped, and accordingly there has been a problem that it is difficult to grasp an appropriate timing of layout change.

Further, the above-described conventional technology in regard to the layout of the manufacturing line in a factory disclosed in Japanese Patent Application Laid-Open No.6-84740 is a technology used in a layout planing stage, and accordingly modification after completion of the layout has not been considered. Therefore, the status of a layout after completion of the layout can not be grasped, and accordingly there has been a problem that it is impossible to change the layout of the facility at an appropriate timing.

Further, the above-mentioned conventional technology in regard to the imposing of parking charge disclosed in Japanese Patent Application Laid-Open No.6-187348 is formed on the premise that the POS is used, there is a problem in that the technology can not be applied to a case where use of the POS is impractical such as a case of an office building.

Further, in the above-mentioned conventional technology in regard to the automatic calling of the elevator disclosed in Japanese Patent Application Laid-Open No.2000-191246, the cause of calling of the elevator considered is only a single event of opening and closing of the door. Therefore, there is a problem in that application of the technology is limited only to the apartment house of which the residents have high provability of the action pattern of opening the door and then taking the elevator.

Further, the above-mentioned conventional technology in regard to performing of the maintenance work of the facility has the following problem because the maintenance work is periodically performed regardless of the status of using the facility such as number of the users. The problem is, for example, that even if maintenance is necessary, the maintenance is not performed to cause problems on the appearance or the safety, or on the other hand, that even if maintenance is unnecessary, the maintenance is performed to cause unnecessary cost.

Further, the methods of automatically collecting the person flow line information disclosed in Japanese Patent Application Laid-Open No.2000-191246 and Japanese Patent Application Laid-Open No.11-64505 are difficult to collect detailed flow line information including specific attribution of the moving body because an unspecified number of persons are object to be monitored, and accordingly the usable form of the information is limited to a special use such as layout modification in a facility.

### SUMMARY OF THE INVENTION

An object of the present invention is to provide a facility monitoring system which monitors identified persons, that is, identified persons in strong connection with a facility of objects to be monitored such as the employees or the residents as the objects to be monitored, and can provide very useful movement cost information.

Another object of the present invention is to provide a facility monitoring system having a movement cost monitoring function which monitors a condition of appropriateness of the layout at present through collecting flow line information of identified persons in strong connection with a facility, and can recommend a user to change the layout at an appropriate timing.

A further object of the present invention is to provide a facility maintenance assisting system for planing an appropriate maintenance work of a facility corresponding to a using status id the facility.

In order to attain the above objects, the present invention is characterized by a facility management system comprising a flow line-measuring means for measuring a flow line of a moving body by detecting the moving body in a facility to be monitored; and a management information generating means for producing management information for management from the flow line information, wherein the management information generating means comprises a moving body identifying means for identifying the moving body; and a movement cost-calculating means for calculating a cost expended on movement of the moving body from the flow line information, and the movement cost-calculating means calculates the movement cost based on a time unit price specific to the identified moving body and a time period required for the movement as the movement cost.

Further, in order to attain the above objects, the present invention comprises a flow line-measuring means for detecting a moving body in a facility to be monitored, and for measuring a flow line of the moving body; a facility-using status-calculating means for identifying a user from the measured flow line data and facility data of information specific to a facility such as place of the facility, a maintenance management cost and so on, and for calculating facility-using status data of information relating to use of the facility such as using time and so on; an imposed charge-calculating means for calculating imposed charge data showing a relationship between an amount of imposed money and a department to be imposed from the calculated facility-using status data, the facility data and organization data expressing a belonging relationship between said user and the department in the facility; and a accounting processing means for totally performing accounting processing based on the imposed charge data.

Further, in order to attain the above objects, the present invention comprises a flow line-measuring means for detecting a moving body in a monitored object and for measuring a flow line of the moving body; a flow line history-checking means for judging whether or not the measured flow line data conforms with a flow line history pattern expressing a condition of calling an elevator, and for calling the elevator when the measured flow line information conforms with the flow line history pattern; and an elevator-control means for actually controlling the elevator.

Further, in order to attain the above objects, the present invention comprises a flow line-measuring means for detecting a moving body in a monitored object, and then measuring a flow line of the detected object; a histogram-calculating means for dividing a facility into small zones from the flow line data, and then calculating histogram data expressing a using frequency for each of the small zones; a histogram-evaluating means for forming a maintenance plan corresponding to the using frequency obtained from the calculated histogram using the using frequency; and a facility maintenance planning means for integrating the whole maintenance plan based on the maintenance plans.

### BRIEF DESCRIPTION OF DRAWINGS

FIG. 1 is a block diagram showing the functional structure of an embodiment of a facility management system including a movement cost monitoring system in accordance with the present invention.

FIG. 2 is a block diagram showing the hardware structure of the movement cost monitoring system in accordance with the present invention.

FIG. 3 is flowcharts showing the flow of the total processing of the movement cost monitoring system in accordance with the present invention.

FIG. 4 is a view explaining an example of a flow line measuring unit using video cameras.

FIG. 5 is a view explaining an example of flow line data obtained by the video cameras.

FIG. 6 is a table showing an example of a data structure of the flow line data obtained by the video cameras.

FIG. 7 is a flowchart showing a flow of movement cost calculation processing.

FIG. 8 is a flowchart showing a flow of flow line length calculation processing.

FIG. 9 is a view showing an example of an output picture.

FIG. 10 is a block diagram showing the functional structure of the movement cost monitoring system having a facility layout optimization means.

FIG. 11 is a vie showing an example of calculation of cost corresponding to movement.

FIG. 12 is a block diagram showing the functional structure of a facility using charge imposing system for an office building.

FIG. 13 is a block diagram showing the functional structure of a facility using charge imposing system for a shopping building.

FIG. 14 is a block diagram showing the functional structure of an elevator automatic calling system based on a flow line history.

FIG. 15 is a view showing an example of facility control based on a flow line history.

FIG. 16 is a table showing an example of flow line history checking.

FIG. 17 is a block diagram showing the functional structure of a facility maintenance assisting system.

FIG. 18 is a view showing an example of a flow line histogram.

FIG. 19 is a view showing an example of a person flow measuring system using PHS.

FIG. 20 is a table showing an example of a data structure of flow line data obtained by the PHS.

FIG. 21 is a table showing an example of facility-using status data.

FIG. 22 is a flowchart showing a flow of imposed charge calculation processing.

FIG. 23 is a table showing an example of flow line histogram evaluation.

FIG. 24 is a view explaining an example of movement frequency between small zones.

FIG. 25 is a table explaining an example of connection degree between facilities.

FIG. 26 is a view showing another embodiment of a business form in accordance with the present invention in a case where movement costs produced at store A and store B are remotely monitored by a monitoring center.

FIG. 27 is a block diagram showing an example of a detailed functional structure for applying the movement cost monitoring system in accordance with the present invention to the business form of FIG. 26.

### DESCRIPTION OF THE PREFERRED EMBODIMENTS

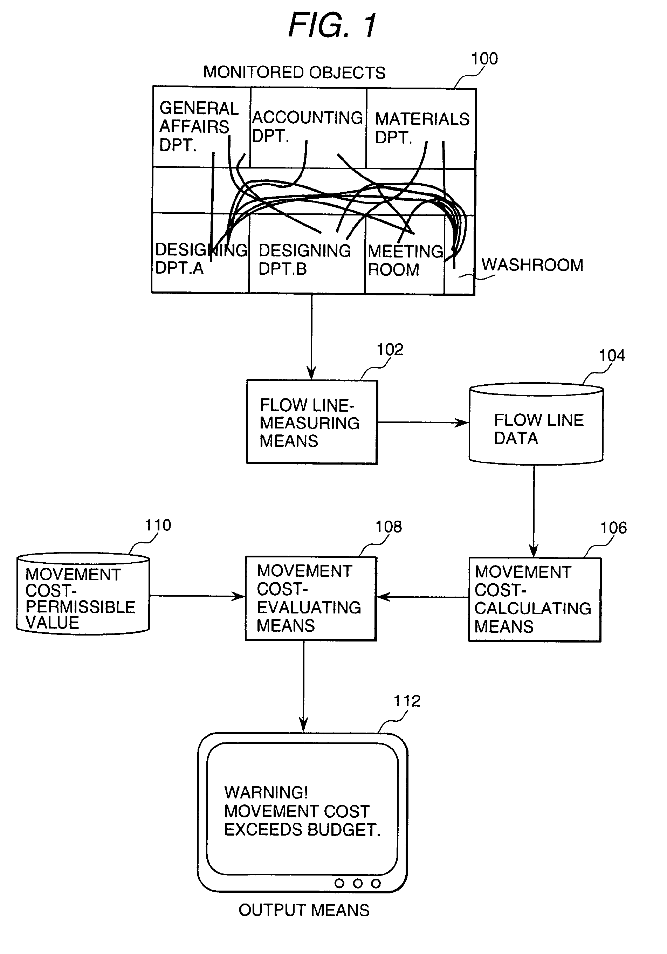

Embodiments of the present invention will be described below in detail, referring to the accompanied drawings. FIG. 1 shows the functional structure of a facility management system including a movement cost monitoring system in accordance with the present invention. A monitored object 100 is a zone of the real world to be monitored by the present system, and a moving body such as a person existing in the zone is an object to be monitored. The facility management system comprises a flow line-measuring means 102 for detecting a moving body 100 in the facility of the monitored object and measuring a flow line of the moving body; and a management information generating means for generating management information for management from the flow line information. The management information generating means comprises a moving body identifying means for identifying the moving body; a movement cost-calculating means 106 for calculating a cost expened on the movement of the moving body 100 from the flow line information; a movement cost-evaluating means 108 for evaluating the calculated cost according to a given standard; a control means for performing display, warning and control based on the movement cost evaluation result; a facility layout-optimizing means and an output means 112.

As to be described later, the moving body identifying means specifies a person of the moving body 100 through a method of checking a feature in a picture of the moving body taken by a video camera and processed with pre-stored data or using IC card data or using a PHS terminal.

The flow line-measuring means 102 detects a moving body in the monitored object 100, and measures the flow line, and accumulates the result as flow line data 104. The movement cost-calculating means 106 calculates a cost expended on movement of the moving body. That is, a movement cost from the accumulated flow line data 104. As the movement cost, a total movement time of the moving body, a total movement distance of the moving body or the like may be considered. The movement cost-evaluating means 108 compares the movement cost calculated by the movement cost-calculating means 106 with a movement cost-permissible value 110 preset by a user of the present system, and judges whether or not the movement cost is within the permissible range. The output means 112 is a display unit such as a display, and outputs an image or voice in order to make the user of the present system pay his attention when it is judged that the movement cost at present exceeds the permissible range.

There, the value of the movement cost calculated by the movement cost-calculating means 106 may be directly output using the output means 112 instead of outputting the evaluated result of the movement cost-evaluating means 108 using the output means 112.

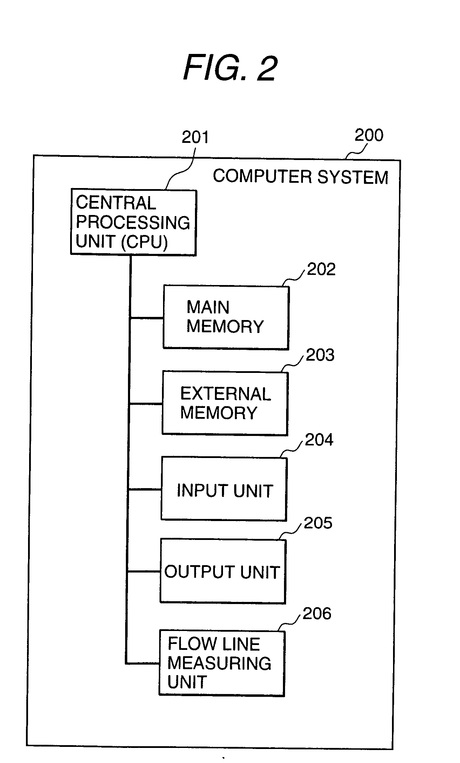

FIG. 2 shows the hardware structure of the movement cost monitoring system in accordance with the present invention. The movement cost monitoring system of the present invention is formed on a set of computer system 200. The computer system 200 consists of a central processing unit (CPU) 201, a main memory 202, an external memory 203, an input unit 204, an output unit 205, a flow line measuring unit 206 and a bus 207. The central processing unit 201 is a unit for controlling the whole computer system 200. Here, the central processing unit provides the function of the movement cost monitoring system in accordance with the present invention according to programs realizing the functions of the flow line-measuring means 102 stored in the main memory 202, the movement cost-calculating means 106 and the like. The main memory 202 is a memory capable of accessing to data at a high speed such as a RAM (random access memory), and is capable of temporarily storing a control program and data for the central processing unit 201. The programs etc. for realizing the function of the flow line-measuring means 102, the movement cost-calculating means 106 etc. are read from the external memory 203 and stored in the main memory. The data such as the flow line data 104 necessary for executing these programs may be read from the external memory 203 and stored in the main memory 202, if necessary.

The external memory 203 is a unit such as magnetic disk which is slow in data access but large in memory capacity compared to the main memory 202, and semi-permanently stores the control program and the data for the central processing unit 201. The programs etc. for realizing the function of the flow line-measuring means 102, the movement cost-calculating means 106 etc. and the data etc. such as flow line data 104 necessary for executing these programs are stored in the external memory 203. The input unit 204 is a unit consisting of a keyboard, a mouse and the like which receive operation to the system by the user of the present system. The output unit 205 is a unit for displaying the monitored result in a form of image such as a CRT (cathode ray tube) display, a liquid crystal display or the like, or a unit such as a speaker for notifying the analysis result in a form of sound such as a warning sound, and the output unit 205 materializes the output means 112.

The flow line measuring unit 206 is a unit consisting of a wireless, an IC card, a video camera, and the flow line measuring unit 206 materializes the flow line-measuring means 102. The measured flow line 104 is stored in the main memory 202 or the external memory 203. These units are connected to one another by the bus 207 for exchanging data at high speed between the units. As the bus 207, a network such as Ethernet having a data transmission speed not so high or the other connecting means may be used.

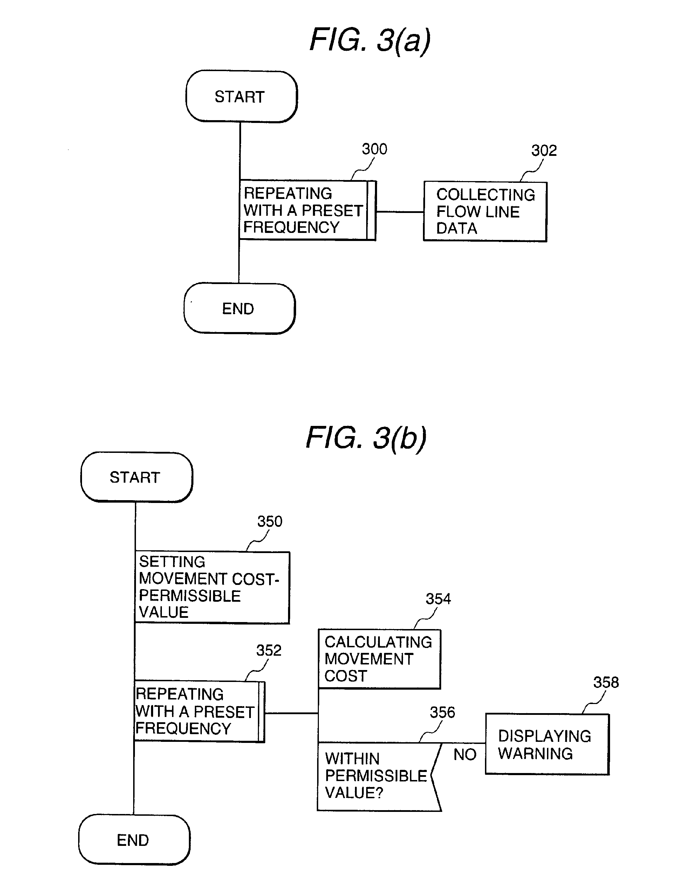

The flow of the total process of the movement cost monitoring system of FIG. 1 in accordance with the present invention will be described, referring to flowcharts shown in FIG. 3. The total process can be roughly divided into two portions. The one is process of collecting the flow line data, and the other is process of evaluating the flow line data. These two processes are asynchronously processed in parallel. These two processes will be successively described below. Initially, the process of collecting the flow line data shown by FIG. 3 (a) will be described. This is a process for obtaining the flow line of a moving body in the monitored object 100. In Step 300, the process of Step 302 is repeated with a given frequency. The given frequency means, for example, a frequency of once a second. In Step 302, a position of the moving body is measured using the flow line-measuring means 102. By the processes of Step 300 to Step 302 described above, a group of points approximately expressing the flow line of the moving body can be obtained. The result is stored as the flow line data 104.

Next, the process of evaluating the flow line data shown in FIG. 3 (b) will be described. This is a process for evaluating the flow line data 104 obtained by the measurement. In Step 350, the user of the present system is made to set a movement cost-permissible value 110. In Step 352, the processes of Step 354 to 358 are repeated with a given frequency. The given frequency means, for example, a frequency of once a month. In Step 354, a movement cost expended on movement of the moving body is calculated using the flow line data for the given time period. In Step 356, it is judged whether or not the calculated movement cost is within the range of permissible value. In more detail, when the calculated movement cost becomes larger than the permissible value 110, it is judged that the calculated movement cost exceeds the permissible value. In Step 358, when it is judged in Step 356 that the movement cost exceeds the permissible value, a warning is output to the user of the present system using the output means 112.

An example of a system using video cameras as the flow line measuring unit 206 will be described below. Initially, a plurality of video cameras are installed in a building so as to produce as few places incapable of being taken picture by the video cameras, that is, blind spots as possible. By interconnecting the plurality of video cameras, a person moving on the picture is traced through image processing to detect the flow line. For example, when the person 401 moves along the flow line 402, the person 401 is traced on the picture by interconnecting the video camera 410, the video camera 411, the video camera 412 and the video camera 413 taking picture of the person 401. Therefore, by setting so that the actual position of the body in the building can be identified from the position of the body on the picture taken by the cameras, the flow line 402 can be obtained from the picture image.

In a case of using image processing, it is generally difficult to identify a person or a moving means among an unspecified number of persons or moving means taken by the video cameras. However, in the case where the persons or the moving means to be identified are limited to the persons in closely connection to the facility of the monitored object, a person can be identified by producing specific vectors from images of the persons, and by checking a person with attribute information or the specific vector of each of the persons in a list of monitored persons. In other words, features on the picture of persons to be identified are pre-stored in a database, and a feature on a picture of a person taken at measuring a flow line is compared with the features in the database, and then the person on a picture taken at measuring a flow line is identified as the person in the database whose feature most agrees with the feature on the picture.

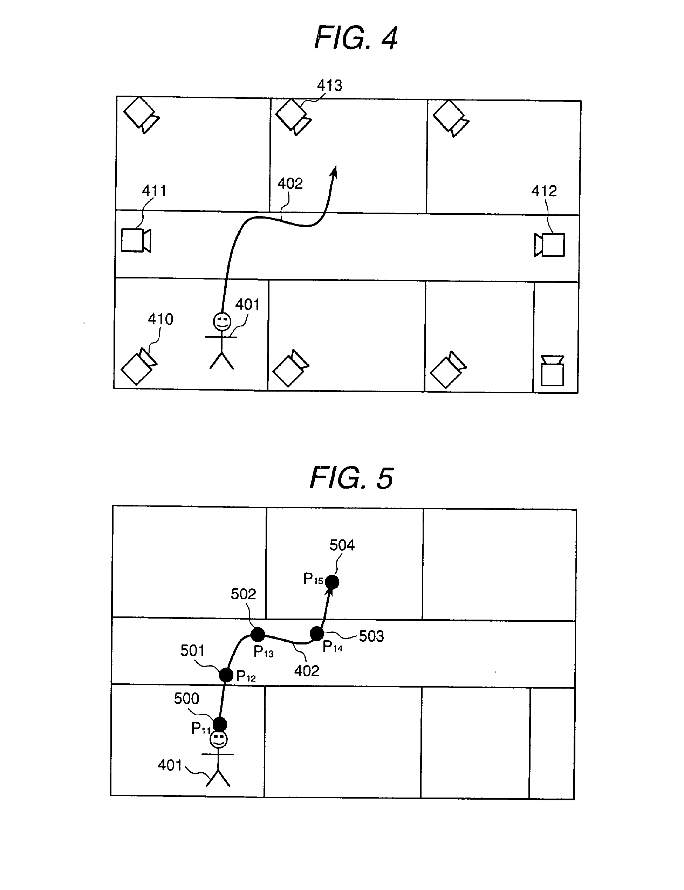

An example of a flow line 104 measured by the flow line-measuring means 102 will be explained below, referring to FIG. 5. Since the flow line-measuring means 102 continuously detects positions of a moving body in a given time interval, a plurality of continuous points on a flow line are measured when a person moves along the flow line. For example, when the person 401 moves along the flow line 402, a train of points , that is, the point 500, the point 501, the point 502, the point 503 and the point 504 are measured. Here, the flow line is approximately expressed by the train of plural points. In order to improve the approximation accuracy, the measurement interval of the flow line-measuring means 102 should be made dense, or the generally used method of expressing a free curve such as the spline interpolation should be employed.

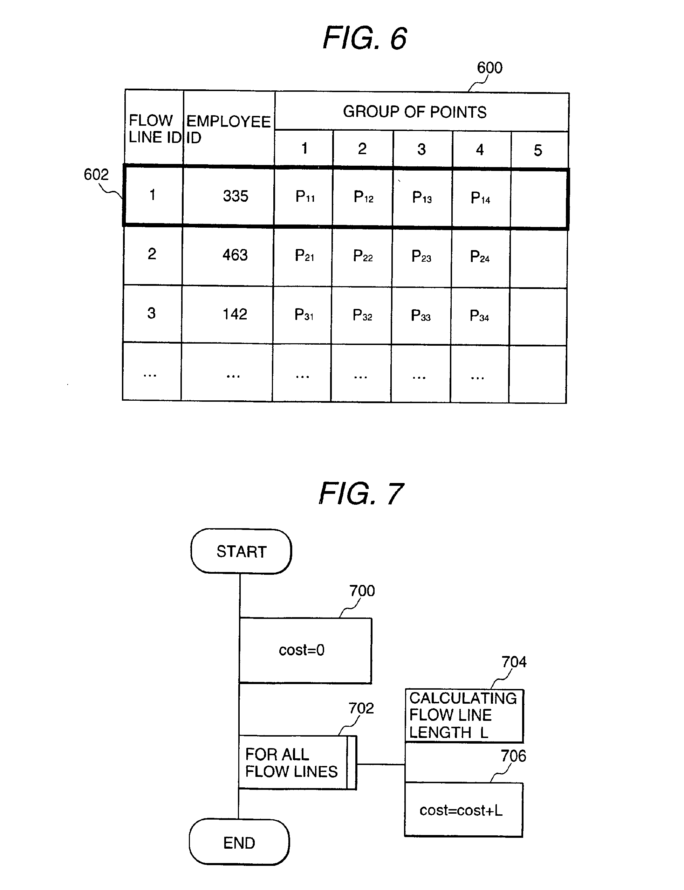

Description will be made below on an example of a data structure in a case where the flow line data is handled using a computer, referring to FIG. 6. The table 600 is a table for storing data of a plurality of flow lines measured by the flow line-measuring means 102. Measured data for one flow line is stored in each row, that is, each record of the table. The record 602 shows an example of stored flow line data for the flow line 402. The record includes a flow line ID of a unique number for identifying measured flow line data, an employee ID of a unique number identifying a person to be measured, and point train information of a group of points on the flow line. However, it is not always necessary to store all the information described above. Information not used for processes to be executed later may not stored. On the contrary, information in connection to the flow line such as time measuring the point train other than the above information may be stored, depending on necessity.

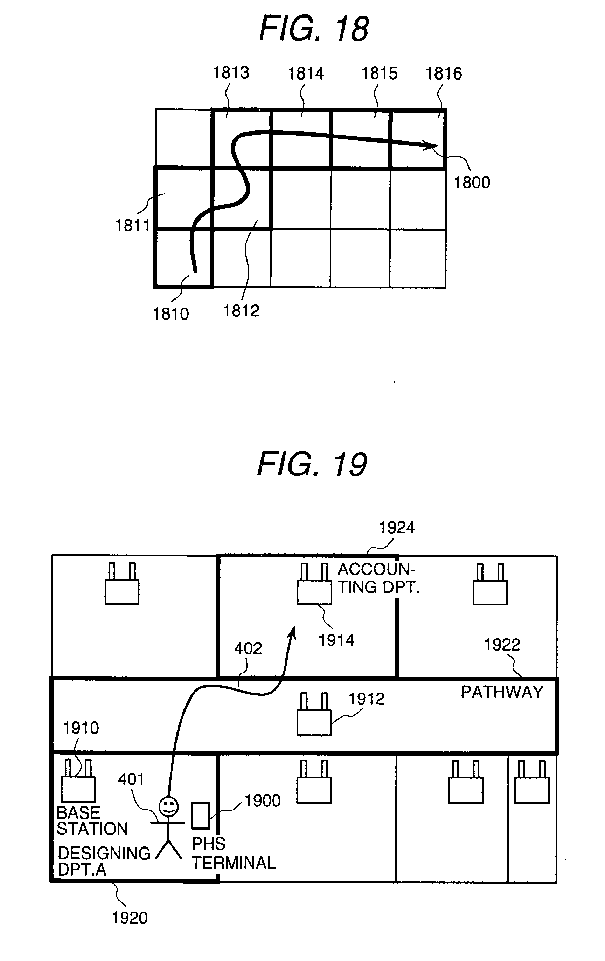

Another example of the flow line measuring unit 206 will be described below, referring to FIG. 19. This is a method using a PHS (personal handyphone system) of one of cordless telephone system forms. The PHS is a system which makes voice communication capable by communicating between a PHS terminal carried with a person and a plurality of base stations placed inside a building. The PHS terminal can detect an intensity of electric field applied by each of the base stations. In general, since the intensity of electric field becomes stronger as the distance between the PHS terminal and the base station is shorter, it can be known that the PHS terminal exists at a place near a base station which gives the strongest intensity of electric field to the PHS terminal. Here, since the base stations are fixed inside the building, the place can be grasped in advance, and accordingly the position of the PHS terminal can be roughly identified.

By using this mechanism, a flow line of a person having the PHS terminal can be grasped by successively detecting the positions of the PHS terminal. Further, since each of the PHS terminals has a specific identifier, the PHS terminal can be identified. Therefore, by forming a database of persons having PHS terminals in advance, a person having a PHS terminal can be identified.

FIG. 19 shows an example of measuring a flow line using the PHS when a person 401 having the PHS terminal 1900 moves along the flow line 402. When the person 401 having the PHS terminal 1900 is in a room of Designing Department A 1920, it can be recognized that the person 401 is at a place near the base station 1910 because the electric field received from the base station 1910 installed in the same room is considered to be the strongest. Similarly, when the person 401 is in a pathway 1922 or in a room of Accounting Department 1924, it can be recognized that the person is at a position near a base station 1912 or a base station 1914, respectively. Therefore, it can be understood that the person moves from the position near the base 1910 to the position near the base station 1912, and then finally moves to the place near the base station 1914.

Since it is difficult to understand the expression of the place near the base station 1910 and so on, the place will be hereinafter expressed by a name of a zone to which the base station belongs. That is, when it is recognized that the person 401 is at the place near the base station 1910, it will be expressed that the person 401 is in the room of Designing Department A 1920. According to the expression described above, it can be expressed that the person 401 moves from Designing Department A 1920 to the passage 1922, and then finally moves to Accounting Department 1924. Here, the PHS terminal is regarded as the person 401.

Other than the system described above, an entering-and-leaving management system using IC cards and IC card-readers can similarly measure the flow line. The system manages entering and leaving by that the IC card-reader is installed at an entrance of a room, and the IC card possessed by a person is read by the IC card-reader when the person enters into or leaves from the room. Since the system can grasp who and when passes through which entrance, the flow line can be obtained similarly to the flow line measuring unit 206 using the PHS.

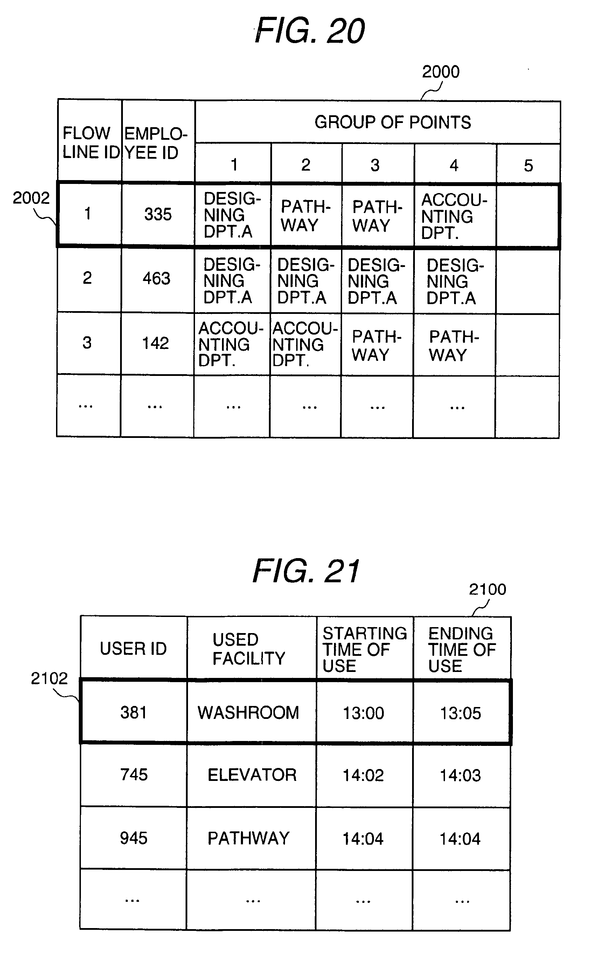

Description will be made below on an example of a data structure in a case where the flow line data measured using the system of FIG. 19 is handled using a computer, referring to FIG. 20. The table 2000 is a table for storing data of a plurality of flow lines 104 measured by the flow line-measuring means 102. Measured data for one flow line is stored in each row, that is, each record of the table. The record 2002 shows an example of stored flow line data for the flow line 402. The record includes a flow line ID of a unique number for identifying measured flow line data, an employee ID of a unique number identifying a person to be measured, and point train information of a group of points on the flow line. Here, it is expressed that a person having an employee ID 335 moves in order of Designing Department A, the pathway, Accounting Department. However, it is not always necessary to store all the information described above. Information not used for processes to be executed later may not stored. On the contrary, information in connection to the flow line such as time measuring the point train other than the above information may be stored, depending on necessity.

FIG. 7 is a flowchart explaining an example of the flow of movement cost calculation processing shown in Step 354 of FIG. 3 in detail. In this example, the total sum of movement distances of the moving bodies within a determined time period is considered as the movement cost. When the value is large, it is regarded that the uselessness is large because the time expended on useless actions of movement which produces no value. In Step 700, a variable COST storing a value of movement cost to be calculated thereafter is cleared to 0. In Step 702, the processes from Step 704 to Step 706 are repeated for all the flow lines measured within the determined time period. In Step 704, a length of flow line, that is, a flow line length L for a flow line to be processed is calculated. In Step 706, a value calculated by adding the flow line length L to be processed to the value of variable COST is set to a new value of variable COST. By the processes described above, the total sum of movement distances of the moving bodies within the determined time period can be calculated as the variable COST.

Although here the total sum of the movement distances is considered as the movement cost, the total sum of movement time may be considered as the movement cost. Further, in taking it into consideration that cost per unit time, for example, payment per hour is different depending on the moving body, the total sum of cost per unit time of a moving body and moving time period of the moving body may be considered as the movement cost.

Further, in taking it into consideration that cost per unit time or per unit distance is different depending on the moving means, the movement cost may be calculated by weighting the flow line.

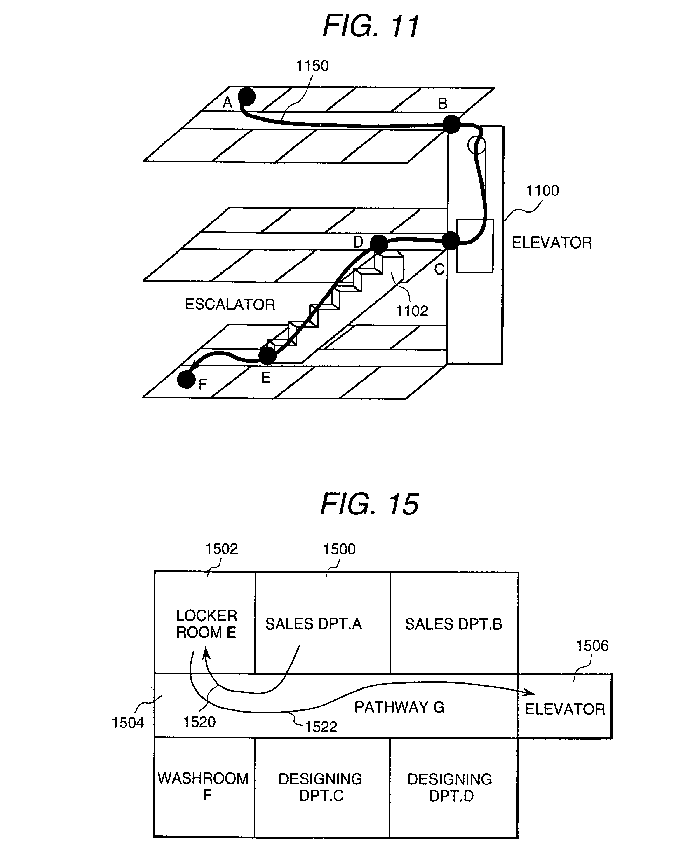

FIG. 11 shows a flow line 1150 moved using an elevator 1100 and an escalator 1102. In the case of the flow line 1150, the section BC is movement using the elevator 1100, and the section DE is movement using the escalator 1102. The other sections are movement by walking. Since the running cost and the maintenance cost are different depending on each of the moving means, it is considered that the cost necessary for movement is different depending on the moving means. Therefore, in taking distance unit cost of the cost when the moving means is used into consideration, the movement cost may be calculated by weighting with the moving distance depending on the moving means as (a length of the section AB + a length of the section CD + a length of the section EF) × distance unit cost of walking + a length of the section BC × distance unit cost of the elevator + a length of the section DE × distance unit cost of the escalator. Further, in taking time unit cost of the cost when the moving means is used into consideration, the movement cost may be calculated by weighting with the moving time depending on the moving means as (a moving time period of the section AB + a moving time period of the section CD + a moving time period of the section EF) × time unit cost of walking + a moving time period of the section BC × time unit cost of the elevator + a moving time period of the section DE × time unit cost of the escalator.

There, the movement cost may be calculated by weighting with differently depending on places even if the same moving means is used. For example, it is more difficult to walk at a place where many persons are coming and going even when movement is similarly performed by walking. Therefore, in such a case, the weighting should be increased. Similarly, the movement cost may be calculated by weighting with specific information of the moving body such as payment per hour, age, official position and type of job of the moving body. Further, since it is more difficult to walk on a curved flow line than on a straight flow line, the movement cost may be calculated by weighting with a curvature expressing a curving degree of the flow line.

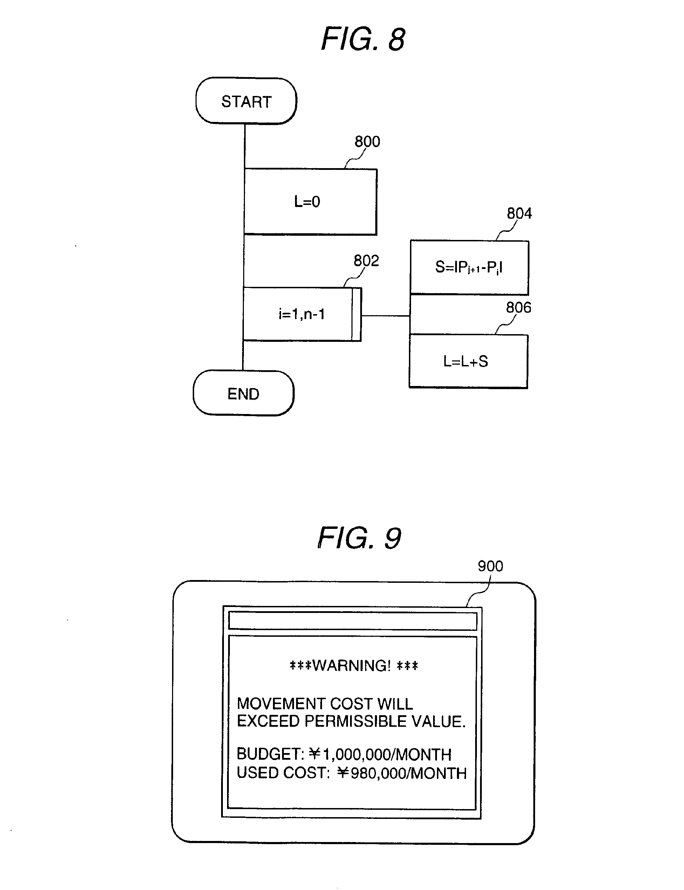

FIG. 8 is a flowchart explaining an example the flow line length calculation processing shown in Step 704 of FIG. 7. In this example, the flow line length is approximately calculated by the total sum of lengths of sections consisting of the flow line data. In Step 800, a variable L storing a value of flow line length to be calculated thereafter is cleared to 0. In Step 802, the processes from Step 804 to Step 806 are repeated for number of sections composing the flow line data. Therein, letting number of a train of points be n, the number of sections is n-1. In Step 804, a length of section S for each of the sections to be processed is calculated. In Step 806, a value calculated by adding the section length S to be processed to the value of variable L is set to a new value of variable L. By the processes described above, the flow line length can be calculated as the variable L.

An example of display of the output means 112 will be described below, referring to FIG. 9. This view shows an example of a picture output when a movement cost exceeds a permissible value. On the picture, there are displayed a character strings expressing warning, a calculated movement cost and the permissible value of movement cost. The user of the present system can be understood by watching the warning that the movement cost now is in an unpredictable state, and can be make a measure such as changing the layout. Although in the example the warning is displayed only using the character strings, the warning may be visually displayed using an additional diagram or the like. Further, other displaying methods such as sound, window or fragrance may be used.

By employing the structure described above, the cost expended on movement of the moving bodies can be quantitatively calculated, and the warning can be output to the user of the present system when the cost exceeds the permissible range. Therefore, the user of the present system can change the layout of the facility at an appropriate timing.

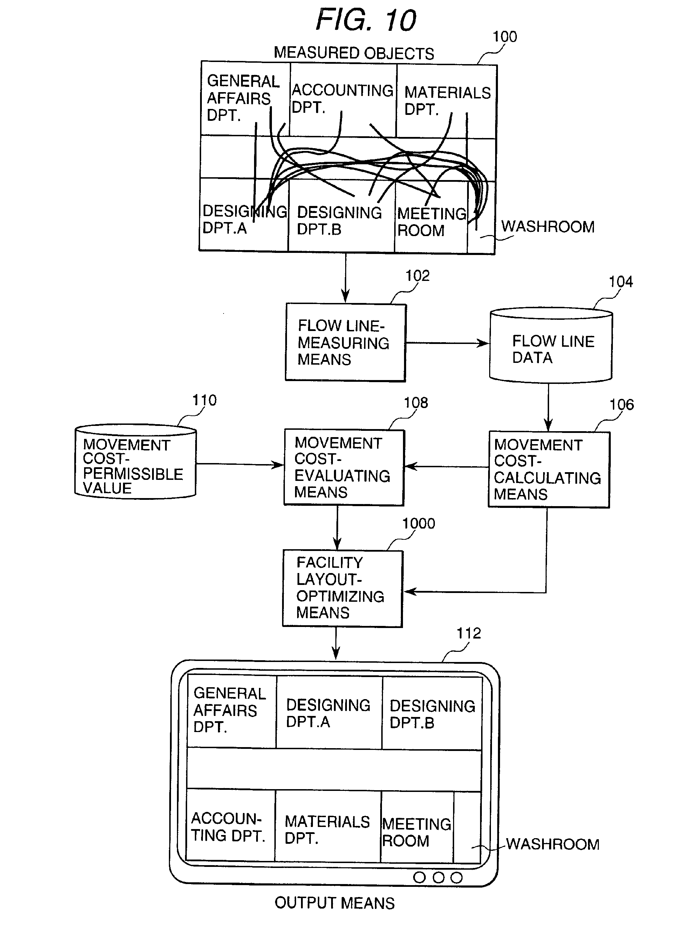

Although the above-described embodiment gives only the warning when the movement cost exceeds the permissible range, a proposed modified plan for changing the layout may be proposed to the user of the present system. In such a case, a facility layout-optimizing means 1000 shown in FIG. 10 is newly added to the functional structure shown in FIG. 1. The facility layout-optimizing means 1000 forms an optimized plan of the layout so as to minimize the movement cost and outputs the result when the movement cost exceeds the permissible range. In order to optimize the layout, a layout minimizing the movement cost should be calculated by performing simulation to predict movement costs for all combinations of layouts. In performing the simulation of movement cost, the movement cost should be calculated by calculating a relational degree between facilities from actually measured flow line data, and then generating simulated flow line among the facilities for a given layout with a probability corresponding to the relational degree.

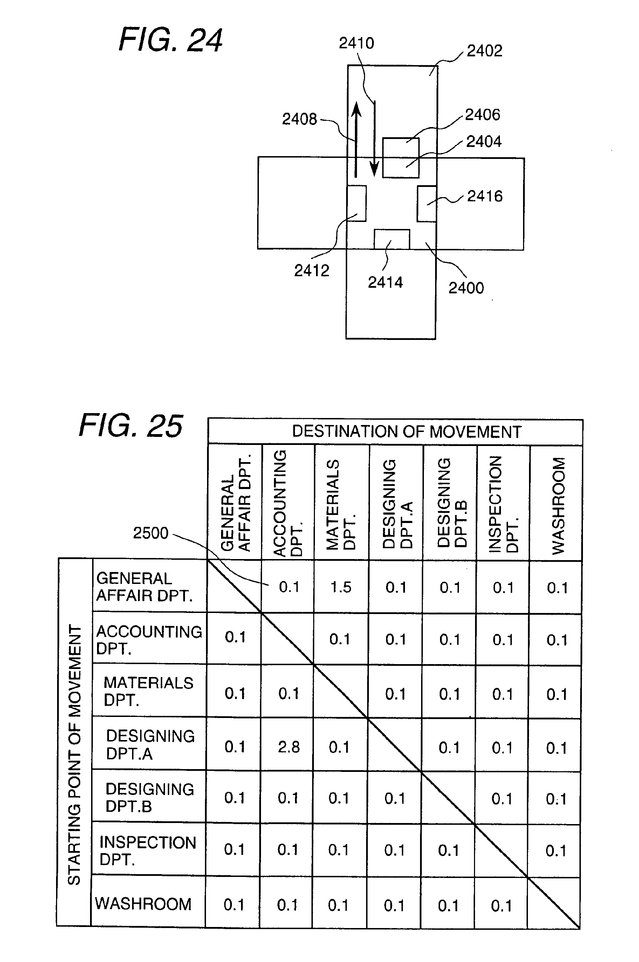

An example of the relational degree between facilities expressing a depth of relation between facilities will be described below, referring to FIG. 25. The relational degree can be obtained by calculating a movement frequency from one facility to the other facility from the measured flow line information, and then dividing the movement frequency by a given time to obtain a movement frequency per unit time. Assuming the given time is one minute, it can be understood from the element 2500 that the flow line from General Affair Department to Accounting Department occurs with a frequency of 0.1 times per minute. When the value is large, the value expresses that the flow line between the both facilities frequently occurs, and means that the relation between the both facilities is deep.

By employing the structure described above, the user of the present system can immediately make a plan to change the layout since a proposed modified plan of the layout is shown at a timing that the movement cost exceeds the permissible range and the layout should be reviewed.

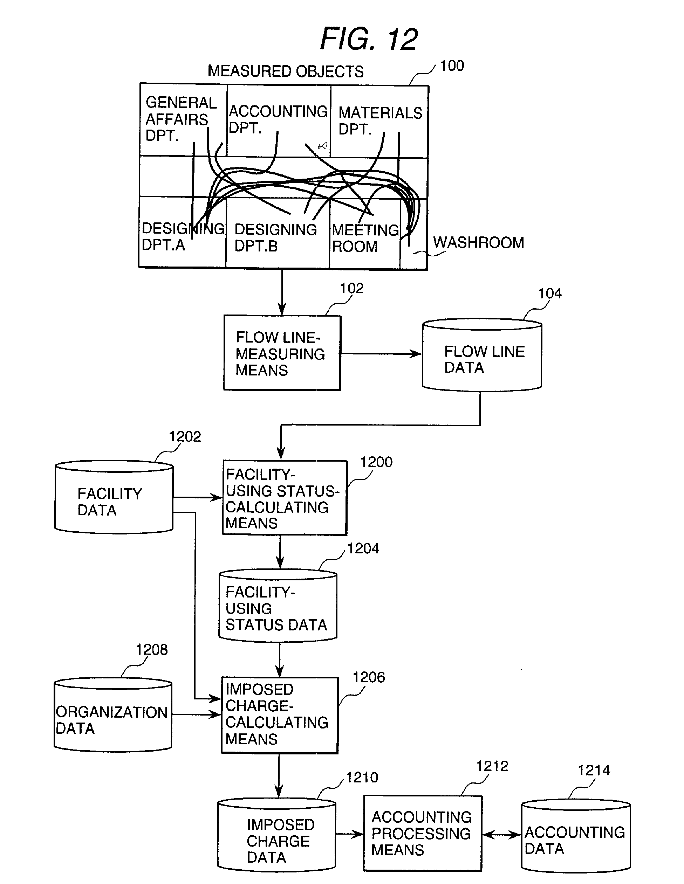

Another embodiment in accordance with the present invention will be described below, referring to FIG. 12. This embodiment is a system which imposes using charge of a facility based on a using status of the facility calculated from flow line information. In a case of assuming an office building, there are many common facilities such as an elevator, a meeting room, a washroom and so on. In order to maintain these common facilities, maintenance management cost such as maintenance charge, cleaning cost, electricity and heating cost are required. In order to make unfairness as small as possible, the present invention provides a system for imposing these costs according to the using status of the facilities. For example, ever time when an employee uses the common facility such as an elevator, a using charge for the purpose of maintenance management of the facility is imposed to a department to which the employee belongs. The functional structure will be described below, referring to FIG. 12. Since the measured object 100, the flow line-measuring means 102 and the flow line data 104 are the same as those described in FIG. 1, the explanation is omitted here. A facility-using status-calculating means 1200 calculates facility-using status data 1204 from the flow line data 104 and facility data 1202. The facility data 1202 is information specific to a facility such as place, maintenance management cost and so on for the facility requiring cost for the maintenance management. Further, the facility-using status data 1204 is information relating to use of the facility such as user, using time and so on.

Assuming that a person is regarded as using a facility when the person keeps close to the facility for a given time or longer, the using status of the facility can be calculated by checking the above information with the flow line data 104. An imposed charge-calculating means 1206 calculates imposed charge data 1210 expressing the relationship between an amount of imposed money and a department to be charged from the calculated fecility-using status data 1204, the facility data 1202 and organization data 1208 expressing the relationship between the employee and the employee's belonging department. An accounting processing means 1212 is a means totally in charge of accounting processing of the company, and makes procedure to impose the facility using charge on the department to which the user of the facility belongs, and then stores the result in accounting data 1214. Although in this embodiment the using charge is imposed on the department to which the user of the facility belongs, the using charge may be imposed directly on the user.

Description will be made on an example of a data structure in a case where the facility-using status data 1204 is handled using a computer, referring to FIG. 21. The table 2100 is a table for storing plural kinds of facility-using status data 1204 calculated by the facility-using status-calculating means 1200. Calculated data for one facility using status is stored in each row, that is, each record of the table. For example, the record 2102 includes an employee ID expressing a user of a facility, the used facility, and starting time of use and ending time of use. However, it is not always necessary to store all the information described above. On the contrary, information in connection to the using status of the facility other than the above information may be stored, depending on necessity.

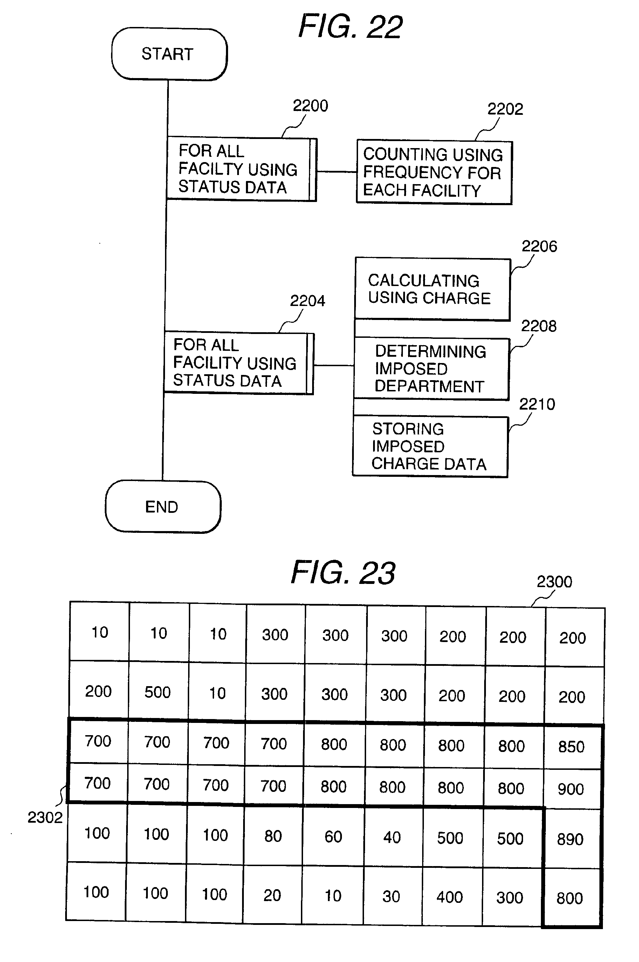

FIG. 22 is a flowchart explaining the flow of processing of the imposed charge-calculating means 1206. The processing from Step 2200 to 2202 is processing for calculating a using frequency for each of the facilities which is used for calculating an imposed charge later. Step 2200 expresses repeating of the processing of Step 2202 for all the facility-using status data within a given time period. In Step 2202, a using frequency for each of the facilities is counted based on the processed facility-using status data. Successively, the processing from Step 2204 to Step 2210 is processing for actually determining using charge of the facilities and a department on which the using charge of the facilities. Step 2204 expresses repeating of the processing from Step 2206 to Step 2210 for all the facility-using status data within the given time period.

In Step 2206, using charge of the facilities in regard to the facility-using status data to be processed is calculated. As the using charge of the facilities, it is possible to use a value calculated by dividing a cost required for maintaining the facilities during a given time period by the using frequency of the facilities. For example, in a facility requiring a maintenance management cost of 1 million yen per month, the using charge per 1 using become 100 yen when the facility is used 10,000 times during 1 month-period. In Step 2208, a department on which the using charge calculated in Step 2206 is to be imposed is determined. In order to make the determination, a department to which the used of the facility belongs should be searched from the organization data 1208. In Step 2210, the information of the calculated using charge and the imposed department is stored in the imposed charge data 1210.

By employing the structure described above, the present invention can be applied to a building not having the POS because the cost for use of the facility can be imposed on the department to which the user belongs.

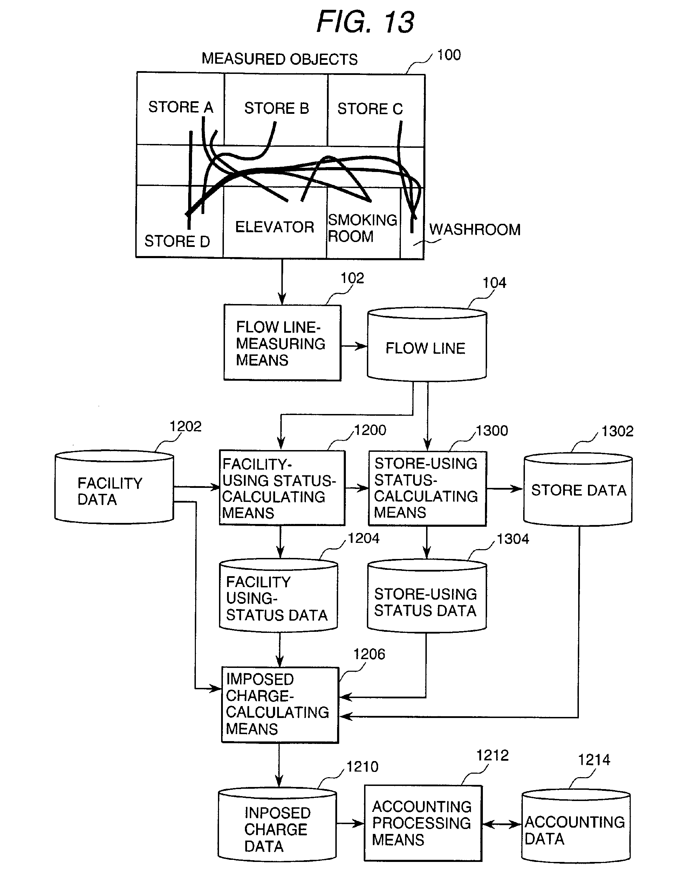

The present invention can be also applied to a shopping building occupied by a plurality of retail stores as well as the office building explained in FIG. 12. FIG. 13 shows an example of the embodiment. Although in the case of the office building the using charge of the facility is imposed on the department to which the user of the facility belongs, in the case of the shopping building it is considered rational that the using charge of the facility is imposed on a store at which a shopper drops in for shopping. In this case, since the shopper often drops in at a plurality of stores, the using charge of the facility is imposed on a plurality of stores.

The functional structure will be described below, referring to FIG. 13. Since the components are the same as those explained in FIG. 12 except a store-using status-calculating means 1300, a store data 1302 and a store-using status data 1304, explanation on the same components will be omitted here. The store-using status-calculating means 1300 calculates the store-using status data 1304 from the flow line data 104 and store data 1302. The store data means information specific to a store such as place of the store etc. Further, the store-using status data 1304 is information on use of a store such as a shopper to the store, using time of the store and so on. Assuming that a person is regarded as using a store when the person keeps inside the store for a given time or longer, the using status of the store can be calculated by checking the above information with the flow line data 104. An imposed charge-calculating means 1206 calculates imposed charge data 1210 expressing the relationship between an amount of imposed money and a store to be charged from the calculated store-using status data 1304, the facility-using status data 1204, the store data 1302 and the facility data 1202. Although in this embodiment the using charge is imposed on the store which the shopper uses, the using charge may be imposed directly on the user.

By employing the structure described above, the charge can be imposed even in the case where there are a plurality of imposed stores because the cost for use of the facility can be imposed on the store at which the user drops in.

Although the above-described form of imposing the using charge are different between FIG. 12 and FIG. 13, a form mixing the both forms may be considered. For example, in the case of shopping building, the imposing form shown by FIG. 13 is applied to imposing of charge caused by the shopper, and the imposing form shown in FIG. 12 is applied to imposing of charge caused by the employee of the store. By employing the structure described above, imposing of charge for using the facility meeting the actual situation can be performed.

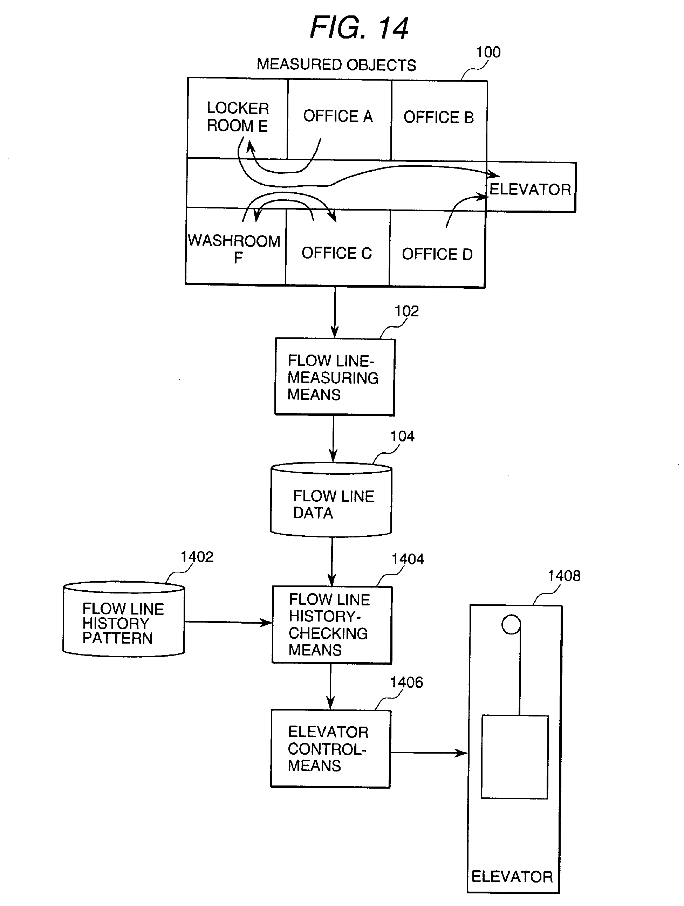

Another embodiment in accordance with the present invention will be described below, referring to FIG. 14. This embodiment is a system for controlling a facility ancillary to a building such as an elevator, an automatic door, an air conditioner based on flow line history information. It may be often observed that a person in charge of sales drops in at a locker room before going out.

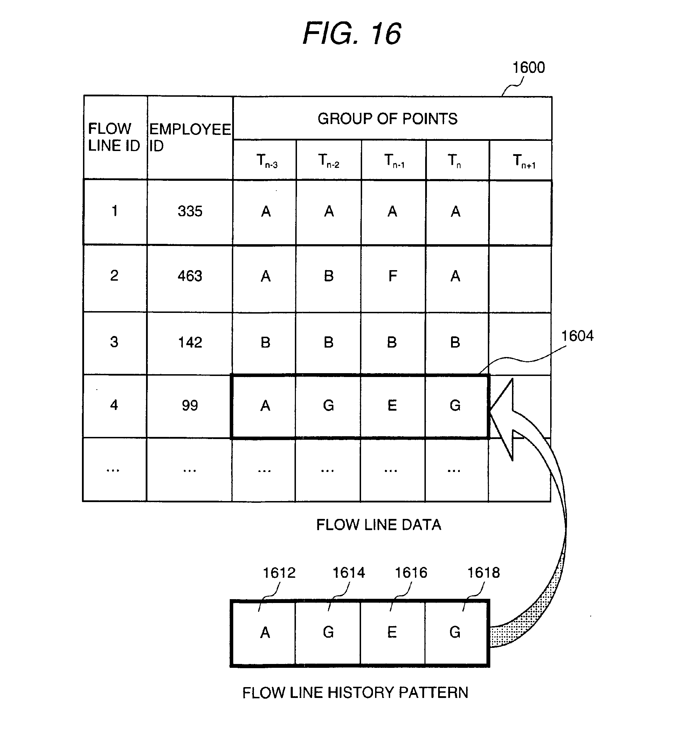

In such a case, when a flow line 1522 moving from a locker room E 1502 to a pathway G 1504 is measured after a flow line 1520 moving from Sales Department A 1500 to the locker room E 1502, as shown in FIG. 15, an elevator 1506 is automatically called by considering that the elevator 1506 will be used next with a high probability.

The functional structure will be described below, referring to FIG. 14. This is an example of automatically calling an elevator when a specific flow line history is measured. The flow line-measuring means 102 previously described detects a moving body in a monitored object 1400, and measures the flow line to accumulate the result as flow line data 104. A flow line history pattern 1402 indicates a condition of calling the elevator. The flow line history pattern may be manually set by a person, or may be automatically produced using a computer by analyzing the tendency from past flow line data 104. A flow line history-checking means 1404 judges whether or not the measured flow line data 104 meets the flow line history pattern 1402. If it is judged that the measured flow line data 104 meets the flow line history pattern 1402, the flow line history-checking means 1404 outputs a control signal for calling the elevator 1408 using an elevator-control means 1406.

Procedure of checking the flow line history using the flow line history-checking means 1404 will be described below, referring to FIG. 16. The table 1600 is a table for storing plural kinds of flow line data measured by the flow line-measuring means 102, and is the similar format as that explained in FIG 20. A flow line history pattern 1610 expresses that a searched object is a flow line of moving in order of a position A 1612, a position G 1614, a position E 1616 and a position 1618. In the table 1600, the flow line data meeting the flow line history pattern 1602 is a flow line record 1604. Therefore, this flow line data is the result checked by the flow line history-checking means 1404.

Although each element of the flow line history pattern 1610 and the point train of the flow line are checked in one-to-one correspondence here, checking by normalized expression commonly used in character strain check using a computer may be used in order to give fuzziness. For example, in a case where a person moves in order of AGEG, the flow line measured by moving speed may sometimes become a form staying at the same position plural times such as AAGEG, AGGEG or the like. However, what is important here is only the order relation of AGEG, and the number of times staying the same position is not necessary to be considered. In the present case, the table should be searched by expressing the flow line pattern 1610 as "A + B + E + G +" by the normalized expression. There, the character "+" indicates once-or-more repetition of a character just before the character "+". That is, the pattern meets a flow line of once-or-more repetition of A, once-or-more repetition of B, once-or-more repetition of C and once-or-more repetition of D.

Although calling of the elevator is automated in this embodiment, changing of operating mode of the elevator may be considered. For example, to a person moving to the elevator from a clinic, the operating mode may be changed to a wheelchair mode in which a time period of keeping the door open of the elevator is extended because it considered that the person can not move normally. Further, in a case where moving speed of a calculated flow line is slow, the operating mode may be changed to the wheelchair mode by considering that a person can not normally move.

By employing the structure described above, the calling condition of the elevator can be freely set based on the flow line information of a person, and the present embodiment can be applied to a building other than an apartment house in which action patterns of persons are limited.

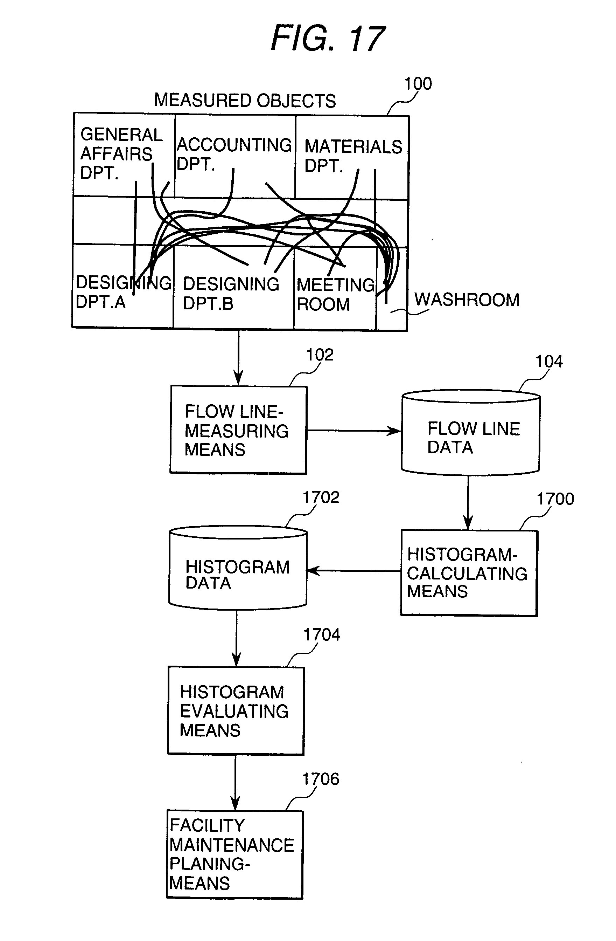

Another embodiment in accordance with the present invention will be described below, referring to FIG. 17. This embodiment is a system that a place having a particularly high using frequency among spatial facilities such as a room, a pathway and the like is determined based on the flow line, and maintenance management is concentrated on the determined place. It is considered that a place of many persons passing through, for example, a pathway in an office building becomes more dirty compared to the other places. Therefore, by determining such a place to clean the place taking first preference, cleaning work can be efficiently performed with less cleaning cost. The functional structure will be described below, referring to FIG. 17. The measured object 100, the flow line-measuring means 102 and the flow line data 104 are the same as those explained in FIG. 1, the explanation will be omitted here. A histogram-calculating means 1700 calculates histogram data 1702 expressing a spatial using frequency of a facility. Using the using frequency obtained from the calculated histogram data 1702, a histogram-evaluating means 1704 forms a maintenance plan corresponding to the frequency, and outputs the result to a facilty maintenance planning means 1706 for actually integrating the whole maintenance plan. A concrete example of the formed maintenance plan is that a request of cleaning a place having a using frequency larger than a given value is issued. Further, as for a place having a using frequency smaller than a given value, since it means that persons hardly use the facility, the facility may be eliminated or the layout may be changed.

An example of the outline of the processing of the histogram-calculating means 1700 will be described below, referring to FIG. 18. A spatial facility such as a hall way is divided into a plurality of small zones, and a value of frequency having number of flow lines passing through each zone is given to the zone. For example, when a flow line 1800 takes place, the values of frequency from a small zone 1810 to a small zone 1816 where the flow line pass through are increased by 1 (one) for each of the zones. By executing this processing to all the flow lines occurring during a given time period, number of the flow lines passing through each of the small zones can be obtained.

Further, information relating to movement between the small zones may be calculated as well as the calculation of the frequency of flow line passing through the small zone. The information relating to movement between the small zones means a probability of moving from a small zone to an adjacent small zone or a difference of persons coming in and going out between small zones adjacent to each other. By showing such information to a person, the person can easily grasp the flow of flow lines.

The information relating to movement will be explained below, referring to FIG. 24. A movement frequency holding zone 2404 and a movement frequency holding zone 2406 for holding information relating to movement between the small zone 2400 and the small zone 2402 are provided between the small zone 2400 and the small zone 2402. The movement frequency holding zone 2404 holds a movement frequency from the small zone 2400 to the small zone 2402. On the other hand, the movement frequency holding zone 2406 holds a movement frequency from the small zone 2402 to the small zone 2400. For example, when a flow line 2408 occurs, the value of the movement frequency holding zone 2404 is increased by 1 (one) by considering that movement from the small zone 2400 to the small zone 2402 occurs. When a flow line 2410 occurs, the value of the movement frequency holding zone 2406 is increased by 1 (one) by considering that movement from the small zone 2402 to the small zone 2400 occurs. Although the relation between the small zone 2400 and the small zone 2402 has been described above, the movement frequency holding zones are similarly provided between the other zones.

By executing such calculating processing of the movement frequency for the flow lines occurring during a given time period, a probability of moving from one zone to another zone can be known. For example, the probability of moving from the small zone 2400 to the small zone 2402 can be calculated by "(the movement frequency from the small zone 2400 to the small zone 2402)/(the total movement frequency from the small zone 2400 to the all adjacent small zones)". There, the movement frequency from the small zone 2400 to the small zone 2402 is a value held by the movement frequency holding zone 2404. The total movement frequency from the small zone 2400 to the all adjacent small zones is the total sum of the values held by the movement frequency holding zone 2404, the movement frequency holding zone 2412, the movement frequency holding zone 2414 and the movement frequency holding zone 2416. Further, the difference of number of persons coming in and going out from one zone to another zone can be known. For example, a value of subtracting a value held by the movement frequency holding zone 2406 from a value held by the movement frequency holding zone 2404 expresses the difference of number of persons coming in and going out between the both small zones. When the value is positive, the value means that number of persons going out from the small zone 2400 to the small zone 2402 is larger than number of persons coming in from the small zone 2402 to the small zone 2400. When the value is negative, the value means that number of persons going out from the small zone 2400 to the small zone 2402 is smaller. When the value is 0 (zero), the value means that there is no difference between numbers of persons going out and coming in.

An example of the outline of the processing of the histogram-evaluating means 1704 will be described below, referring to FIG. 23. Histogram data 2300 is a table holding number of flow lines passing through a facility, that is, a passing-through frequency, and a numeral in each small zone expresses the passing-through frequency. When a frequency value of a small zone becomes larger than a given allowable value, the histogram-evaluating means 1704 judged that cleaning is required. Here, when the allowable value is assumed to be 700, a group of the small zones 2302 are objects to be cleaned. The histogram-evaluating means 1704 notifies a facility maintenance-planing means 1706 of the zones as objects to be cleaned. When cleaning is completed, the histogram-evaluating means 1704 clears the frequency values to 0 to prepare for cleaning next time. Further, it is possible that the values of the histogram data 2300 are shown to the user to entrust the judgment to the user. In this case, in order to make the histogram data 2300 easily understandable, the visualization technology used in visualization of scientific and technical calculation result should be used. For example, in a case of visualizing scalar quantities such as the passing-through frequencies of the small zones in the histogram data 2300, the scalar quantities should be displayed by a contour map in which small zones of an equal passing-through frequency are connected by a line. In a case of visualizing vector quantities such as the movement frequencies between the small zones in the histogram data 2300, the vector quantities should be displayed by a vector map in which the vector is displayed by an arrow. In this case, the length, the thickness, the color or the brightness of the vector may be varied according to the magnitude of the movement frequency.

By employing the structure described above, effective maintenance management can be performed because a place used by many persons can be determined and maintenance management can be concentrated on the determined place.

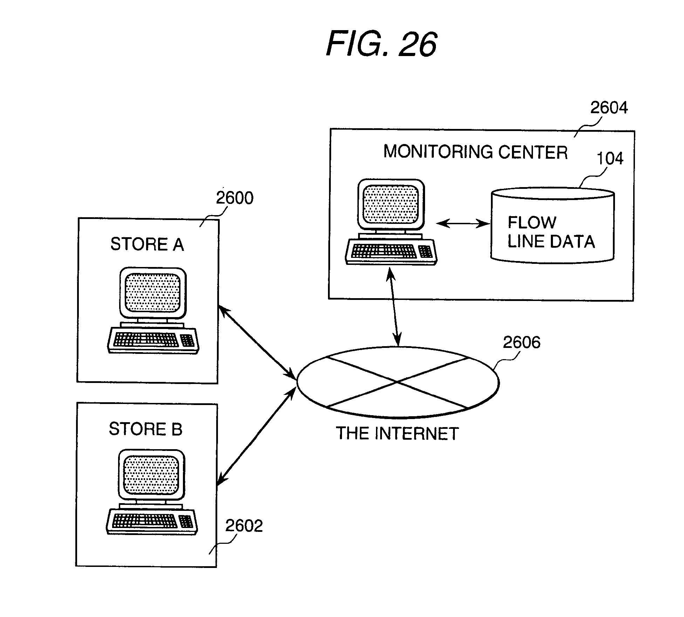

A form of business using the movement cost monitoring system of FIG. 1 will be described below. Therein, it is assumed a monitoring service business that a monitoring center are integratively monitoring flow line statuses in a plurality of stores, and recommends an improving measure to a store when the movement cost of the store is large. FIG. 26 shows a business form that the movement costs occurring at a store A (2600) and a store B (2602) are remotely monitored at a monitoring center 2604. The monitoring center 2604 is connected to the store A (2600) and the store B (2602) by the Internet 2606 to make mutual data exchange possible.

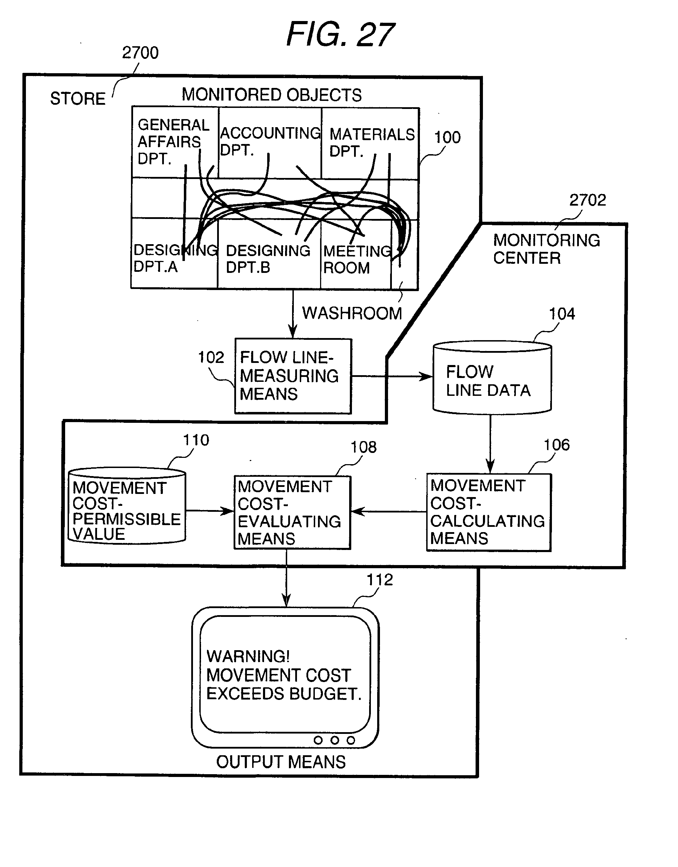

FIG. 27 shows the detailed functional structure for applying the movement cost monitoring system in accordance with the present invention to the business form described above. Although the movement cost monitoring system is functionally similar to the system shown by FIG. 1, the different point is that the functions are distributed and allocated to the stores 2600, 2602 and the monitoring center 2604. A domain 2700 shows functions which should be allocated to the store to be monitored. It can be understood from the figure that a flow line-measuring means 102 and an output means 112 are allocated to the store. On the other hand, a domain 2702 shows functions which should be allocated to the monitoring center 2606 for monitoring the stores to be monitored. It can be understood from the figure that a movement cost-calculating means 106, a movement cost-evaluating means 108, a flow line data 104 and a movement cost-permissible value 110 are allocated to the monitoring center 2606.

The flow of the processing in the business form is the same as the processing shown by the flowchart of FIG. 3, and can be divided into two kinds of processing, that is, the processing for collecting flow line data and the processing for evaluating the flow line data. FIG. 3 (a) is the flowchart showing the processing for collecting the flow line data. This is a process for obtaining the flow line of a moving body in each of the stores to be monitored. In Step 300, the process of Step 302 is repeated with a given frequency. In Step 302, a position of the moving body in each of the stores is measured using the flow line-measuring means 102 installed in each of the stores. By the processes of Step 300 to Step 302 described above, the flow line of the moving body can be obtained. In the monitoring center 2604, the result is accumulated as the flow line data 104.

Next, the process of evaluating the flow line data shown in FIG. 3 (b) will be described. This is a process for evaluating the flow line data 104 obtained by the measurement. In Step 350, a monitoring person of the monitoring center is made to set a movement cost-permissible value 110. In Step 352, the processes of Step 354 to 358 are repeated with a given frequency. In Step 354, a movement cost expended on movement of the moving body is calculated using the flow line data for the given time period by the movement cost-calculating means 106 installed in the monitoring center 2604. In Step 356, it is judged whether or not the calculated movement cost is within the range of permissible value using the movement cost-evaluating means 108 installed in the monitoring center 2604. In Step 358, when it is judged in Step 356 that the movement cost of a store exceeds the permissible value, a warning is output to a manager of the store to be monitored using the output means 112 installed in the shop.

Since the data necessary for monitoring can be exchanged through the Internet by employing the business form described above, the monitored object and the monitoring center can be separated from each other, and the remote monitoring can be realized. Further, since the monitoring center can exchange data with a plurality of monitored objects, the plurality of monitored objects can be monitored by a single monitoring center, and accordingly an efficient monitoring business can be realized.

According to the present invention, by limiting the objects to be monitored to specific persons such as the employees or the residents having strong connection to a facility to be monitored, a condition of appropriateness of the layout can be quantitatively grasped in the form of the total flow line length of persons, that is, the movement cost, and a warning can be output to the user of the present system when the movement cost exceeds the permissible value. Therefore, the user of the present system can change the layout of the facility at appropriate timing.

Further, according to the present invention, since the cost for using a facility can be imposed on a department to which a person using the facility belongs based on flow line information of the person, the present invention can be applied to a building not having the OPS.

Further, according to the present invention, since the condition of calling an elevator can be freely set based on the flow line information of persons, there is an effect that the present invention can be applied to the other buildings as well as an apartment house where action patterns of persons are limited.

Furthermore, since a place used by many persons can be determined and maintenance management can be concentrated on the determined place, the maintenance management can be effectively performed.

## Claims

1. A facility management system comprising a flow line measuring means (102) for measuring a flow line of a moving body by detecting said moving body in a facility (100) to be monitored; and a management information generating means for producing management information for management from said flow line information, wherein
said management information generating means comprises a moving body identifying means for identifying said moving body; and a movement cost calculating means (106) for calculating a cost expended on movement of said moving body from said flow line information, and
said movement cost calculating means (106) calculates said movement cost based on a time unit price specific to said identified moving body and a time period required for said movement as said movement cost.

2. A facility management system according to claim 1, wherein said movement cost calculating means (106) calculates a total sum of values as said movement cost, each of said values being calculated by multiplying a time unit price specific to a moving means for moving said identified moving body by a time period required for said movement.

3. A facility management system comprising a flow line measuring means (102) for measuring a flow line of a moving body by detecting said moving body in a facility (100) to be monitored; and a management information generating means for producing management information for management from said flow line information, wherein
said management information generating means comprises a moving means identifying means for identifying a moving means for moving said moving body; and a movement cost calculating means (106) for calculating a cost expended on movement of said moving body from said flow line information, and
said movement cost calculating means (106) calculates a total sum of values as said movement cost, each of said values being calculated by multiplying a distance unit price specific to said identified moving means by a moving distance.

4. A facility management system according to any one of claim 1 to claim 3, wherein said management information generating means comprises a movement cost evaluating means (108) for judging whether or not a cost calculated by said movement cost calculating means (106) is within a permissible range.

5. A facility management system according to claim 4, wherein said management information generating means comprises a facility layout optimizing means (1000) for optimizing a layout of said facility (100) so as to minimize said movement cost.

6. A facility management system according to any one of claim 1 to claim 5, wherein said flow line measuring means (102) installed in said facility (100) to be monitored and said management information generating means installed in a monitoring center (2604) are connected to each other through a communication network (2606).

7. A monitoring service system which uses the facility management system according to any one of claim 1 to claim 5, and statuses of flow line of salespersons as said moving bodies are totally monitored using a management information generating means of a monitoring center (2604) connected to a store (2600, 2602) to be monitored through a communication network (2606), and an evaluated result of each movement cost is supplied to said store (2600, 2602).

8. A facility using charge imposing system which comprises:
a flow line measuring means (102) for detecting a moving body in a facility (100) to be monitored, and for measuring a flow line of said moving body;
a facility using status calculating means (1200) for identifying a user from said measured flow line data (104) and facility data (1202) of information specific to a facility (100) such as place of the facility, a maintenance management cost and so on, and for calculating facility using status data (R04) of information relating to use of the facility (100) such as using time and so on;
an imposed charge calculating means (1206) for calculating imposed charge data (1210) showing a relationship between an amount of imposed money and a department to be imposed from said calculated facility using status data (1204), said facility data (1202) and organization data (1208) expressing a belonging relationship between said user and said department in the facility (100); and
an accounting processing means (1212) for totally performing accounting processing based on said imposed charge data (1210).

9. A facility using charge imposing system according to claim 8, which further comprises:
a store using status calculating means (1300) for calculating store using status data (1304) of information relating to use of a store such as a customer to the shop, time of using the shop and so on from said flow line data (104) and store data (1302) expressing information specific to the store such as place of the store; and
an imposed charge calculating means (1206) for calculating imposed charge data (1210) showing a relationship between an amount of imposed money and a store to be imposed from said calculated store using status data (1304), said facility using status data (1204), said store data (1302) and said facility data (1202).

10. An elevator calling system comprising a facility management system having a flow line measuring means (102) for detecting a moving body in a facility (100) having an elevator (1408) and for measuring a flow line of said moving body; and a management information generating means for generating management information for managing said elevator (1408) from said flow line information, wherein
said management information generating means comprises:
a moving body indentifying means for identifying said moving body based on said flow line information;
a flow line history checking means (1404) for judging whether or not said measured flow line information conforms with a flow line history pattern (1402) expressing a condition of calling said elevator (1408), and to output a control signal to call said elevator (1408) when said measured flow line information conforms with the flow line history pattern (1402); and
an elevator control means (1406) for controlling said elevator (1408) based on said control signal.

11. An elevator calling system comprising a facility management system having a flow line measuring means (102) for detecting a moving body in a facility (100) having an elevator (1408) and for measuring a flow line of said moving body; and a management information generating means for generating management information for managing said elevator (1408) from said flow line information, wherein
said management information generating means comprises:
a moving body identifying means for identifying said moving body based on said flow line information;
a flow line history checking means (1404) for judging whether or not said measured flow line information conforms with a flow line history pattern (1402) expressing a condition of changing a control mode of said elevator (1408), and to output a control signal to change the control mode of said elevator (1408) when said measured flow line information conforms with the flow line history pattern (1402); and
an elevator control means (1406) for controlling said elevator (1408) based on said control signal.

12. A facility maintenance assisting system which comprises:
a flow line measuring means (102) for detecting a moving body in a monitored object (100), and then measuring a flow line of the detected object;
a histogram calculating means (1700) for dividing a facility into small zones from said flow line data (104), and then calculating histogram data (1702) expressing a using frequency for each of said small zones;
a histogram evaluating means (1704) for forming a maintenance plan corresponding to said using frequency obtained from said calculated histogram using said using frequency; and
a facility maintenance planning means (1706) for integrating the whole maintenance plan based on said maintenance plans.

13. A facility maintenance assisting system according to claim 12, which comprises a facility maintenance planning means (1706) for actually integrating the whole maintenance plan.

14. A facility maintenance assisting system according to any one of claim 12 and claim 13, wherein said histogram calculating means (1700) calculates a movement frequency between said small zones.

15. A memory medium which stores a program realizing any one of claim 1 to claim 14 on a computer.
